# EUROPEAN PATENT APPLICATION

(11) **EP 3 800 917 A1**
(43) Date of publication of application: **07.04.2021**
(21) Application number: 19219230.0
(22) Date of filing: 23.12.2019
(51) Int. Cl.: H04W 16/02, H04W 28/16

(54) **COMMUNICATION SYSTEM AND METHOD FOR OPERATING A COMMUNICATION SYSTEM**

(30) Priority: 02.10.2019 EP 19201075; 06.11.2019 EP 19207454; 08.11.2019 EP 19208093
(71) Applicant: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); GUERZONI, Riccardo, 80687 Munich (DE)
(74) Representative: Viering, Jentschura & Partner mbB Patent- und Rechtsanwälte

(57) **Abstract**

According to various embodiments, a communication system is described comprising a quota storage component configured to store a specification of a quota limiting a data rate, a number of communication sessions or a number of registered mobile terminals, a communication control component and a notification component configured to notify the communication control component about the quota. The communication control component is configured to control communication with at least one mobile terminal such that the quota is fulfilled.

## Description

The present disclosure relates to communication systems and methods for operating a communication system.

In a communication network such as a 5G mobile radio communication network it may be desirable to introduce and implement limitations or quota with respect to the data rate in uplink and downlink, e.g. the maximum data rate used by sessions provided by the network slice for a single UE. Similarly, it may be desirable to introduce and implement limitations or quota with respect to the number of mobile terminals registered, e.g. for a certain network slice, or the number of sessions established, e.g. by means of a certain network slice. This may for example be used to prevent overload and thus to ensure a certain performance of the communication network. Corresponding approaches which allow implementation and enforcement such quota are desirable.

According to various embodiments, a communication system is provided including a quota storage component configured to store a specification of a quota limiting a data rate, a number of communication sessions or a number of registered mobile terminals, a communication control component and a notification component configured to notify the communication control component about the quota. The communication control component is configured to control communication with at least one mobile terminal such that the quota is fulfilled.

According to another embodiment, a method for operating a communication system according to the above communication system is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio communication system, for example configured according to 5G (Fifth Generation) as specified by 3GPP (Third Generation Partnership Project).
- Figure 2: shows a radio communication system having network slice quota.
- Figure 3: shows a communication arrangement including a gateway.
- Figure 4: shows a flow diagram illustrating the enforcement of a quota limiting DL (downlink) and/or UL (uplink) throughput per network slice.
- Figure 5: shows a flow diagram illustrating the enforcement of a quota limiting DL and/or UL throughput per network slice in a gateway scenario as illustrated in figure 3.
- Figure 6: shows a flow diagram illustrating the enforcement of a quota limiting the number of registered UEs per network slice.
- Figure 7: shows a flow diagram illustrating the enforcement of a quota limiting DL and/or UL throughput per UE.
- Figure 8: shows a flow diagram illustrating the enforcement of a quota limiting the number of PDU (Protocol Data Unit) sessions per network slice.
- Figure 9: shows a flow diagram illustrating various adjustment communication options.
- Figure 10: shows a communication system according to an embodiment.
- Figure 11: shows a flow diagram illustrating a method for operating a communication system.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication system comprising a quota storage component configured to store a specification of a quota limiting a data rate, a number of communication sessions or a number of registered mobile terminals, a communication control component, a notification component configured to notify the communication control component about the quota, wherein the communication control component is configured to control communication with at least one mobile terminal such that the quota is fulfilled.
Example 2 is the communication system of Example 1, wherein the data rate is the total data rate over the communication sessions provided in a network slice for a mobile terminal or wherein the data rate is the total data rate over all communication sessions provided in a network slice or wherein the quota limits the number of mobile terminals registered in a network slice and/or the number of communication sessions provided in a network slice or wherein the quota limits the number of communication sessions provided for a mobile terminal.
Example 3 is the communication system of Example 1 or 2, wherein the quota is specific for a mobile terminal or wherein communication system comprises a plurality of network slices and/or the quota is specific for a network slice.
Example 4 is the communication system of any one of Examples 1 to 3, wherein the quota specifies a limit of a data rate and the communication control component is a data rate management component configured to monitor and control the data rate of one or more communication connections in the communication system such that the total data rate does not exceed the limit.
Example 5 is the communication system of any one of Examples 1 to 4, wherein the quota specifies a limit of a number of communication sessions or a number of registered mobile terminals and the communication control component is configured to reject a request of a mobile terminal for registration or establishment of a session if the quota has been reached.
Example 6 is the communication system of Example 5, wherein the communication control component is configured to reject the request by means of a rejection including a cause code and/or a back-off timer.
Example 7 is the communication system of any one of Examples 1 to 6, wherein the notification component is configured to notify the communication control component about the quota in response to an adjustment of the quota.
Example 8 is the communication system of Example 7, wherein the communication control component is configured to, upon notification of an adjustment of the quota, de-register one or more mobile terminals, release one or more communication sessions or reduce the data rate of one or more communication connections, respectively, such that the adjusted quota is fulfilled.
Example 9 is the communication system of Example 8, wherein the communication control component is configured to de-register one or more mobile terminals, release one or more communication sessions or reduce the data rate of one or more communication connections, respectively, based on a respective priority of the one or more mobile terminals and/or a respective priority of the communication sessions.
Example 10 is the communication system of any one of Examples 6 to 9, wherein the communication control component is configured to, upon notification of an adjustment of the quota, notify the at least one mobile terminal about the adjusted quota.
Example 11 is the communication system of any one of Examples 1 to 10, wherein the communication control component is a radio access network component of a communication network of the communication system.
Example 12 is the communication system of any one of Examples 1 to 10, wherein the communication control component is a core network component of a communication network of the communication system, in particular an Access and Mobility management function, a Session Management Function, a Policy Control Function, a User Plane Function or a Network Data Analytics Function.
Example 13 is the communication system of any one of Examples 1 to 12, wherein the notification component is an Access and Mobility Management Function, a Session Management Function, Unified Data Management, a Network Slice Selection Function, a Policy Control Function or a Network Data Analytics Function.
Example 14 is the communication system of any one of Examples 1 to 13, wherein the quota storage component is implemented by an Operation, Administration and Maintenance entity or by a memory of the communication management component configured to store the specification of the quota as part of a local configuration or network operator policy.
Example 15 is the communication system of any one of Examples 1 to 14, wherein the at least one mobile terminal or the communication control component is a gateway connected between a mobile radio communication network and one or more further mobile terminals.
Example 16 is the communication system of any one of Example 15, wherein the gateway is configured to act as a mobile terminal with respect to the communication network or notification component with respect to the mobile terminal(s) connected to the gateway.
Example 17 is the communication system of any one of Examples to 1 to 16, wherein the notification component is configured to notify the communication control component about the quota by means of a registration accept message or a registration reject message, a communication session establishment accept message or a communication session establishment reject message.
Example 18 is a method for operating a communication system comprising storing a specification of a quota limiting a data rate, a number of communication sessions or a number of registered mobile terminals, notifying a communication control component about the quota and controlling communication with at least one mobile terminal such that the quota is fulfilled.
Example 19 is the method of Example 18, wherein the data rate is the total data rate over the communication sessions provided in a network slice for a mobile terminal or wherein the data rate is the total data rate over all communication sessions provided in a network slice or wherein the quota limits the number of mobile terminals registered in a network slice and/or the number of communication sessions provided in a network slice or wherein the quota limits the number of communication sessions provided for a mobile terminal.
Example 20 is the method of Example 18 or 19, wherein the quota is specific for a mobile terminal or wherein the communication system comprises a plurality of network slices and/or the quota is specific for a network slice.
Example 21 is the method of any one of Examples 18 to 20, wherein the quota specifies a limit of a data rate and the method comprises monitoring and controlling the data rate of one or more communication connections such that the total data rate does not exceed the limit.
Example 22 is the method of any one of Examples 18 to 21, wherein the quota specifies a limit of a number of communication sessions or a number of registered mobile terminals and the method comprises rejecting a request of a mobile terminal for registration or establishment of a session if the quota has been reached.
Example 23 is the method of Example 22, comprising rejecting the request by means of a rejection including a cause code and/or a back-off timer.
Example 24 is the method of any one of Examples 18 to 23, comprising notifying the communication control component about the quota in response to an adjustment of the quota.
Example 25 is the method of Example 24, comprising, upon notification of an adjustment of the quota, de-registering one or more mobile terminals, releasing one or more communication sessions or reducing the data rate of one or more communication connections, respectively, such that the adjusted quota is fulfilled.
Example 26 is the method of Example 25, comprising de-registering one or more mobile terminals, releasing one or more communication sessions or reducing the data rate of one or more communication connections, respectively, based on a respective priority of the one or more mobile terminals and/or a respective priority of the communication sessions.
Example 27 is the method of any one of Examples 23 to 26, comprising, upon notification of an adjustment of the quota, notifying the at least one mobile terminal about the adjusted quota.
Example 28 is the method of any one of Examples 18 to 27, wherein the communication control component is a radio access network component of a communication network of the communication system.
Example 29 is the method of any one of Examples 18 to 27, wherein the communication control component is a core network component of a communication network of the method, in particular an Access and Mobility management function, a Session Management Function, a Policy Control Function, a User Plane Function or a Network Data Analytics Function.
Example 30 is the method of any one of Examples 18 to 29, wherein the notifying is performed by an Access and Mobility Management Function, a Session Management Function, Unified Data Management, a Network Slice Selection Function, a Policy Control Function or a Network Data Analytics Function.
Example 31 is the method of any one of Examples 18 to 30, wherein the specification of the quota is stored in an Operation, Administration and Maintenance entity or by a memory of the communication management component which stores the specification of the quota as part of a local configuration or network operator policy.
Example 32 is the method of any one of Examples 18 to 31, wherein the at least one mobile terminal or the communication control component is a gateway connected between a mobile radio communication network and one or more further mobile terminals.
Example 33 is the method of any one of Example 32, wherein the gateway acts as a mobile terminal with respect to the communication network or notification component with respect to the mobile terminal(s) connected to the gateway.
Example 34 is the method of any one of Examples to 18 to 33, comprising notifying the communication control component about the quota by means of a registration accept message or a registration reject message, a communication session establishment accept message or a communication session establishment reject message.

It should be noted that one or more of the features of any of the examples above may be combined with any one of the other examples.

According to further embodiments, a computer program and a computer readable medium including instructions, which, when executed by a computer, make the computer perform the method of any one of the above Examples are provided.

In the following, various examples will be described in more detail.

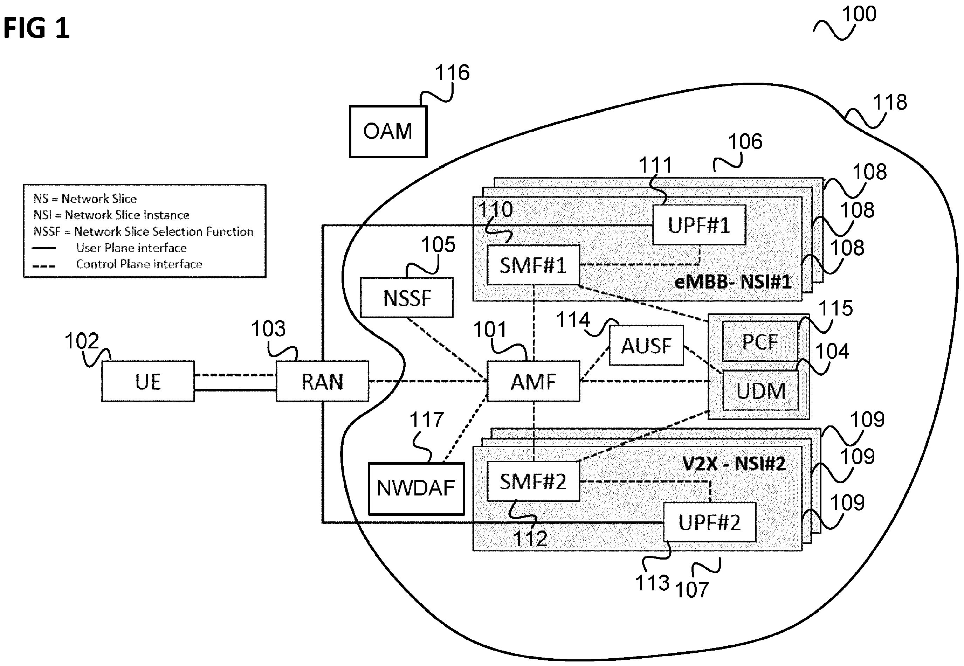

Figure 1 shows a radio communication system 100, for example configured according to 5G (Fifth Generation) as specified by 3GPP (Third Generation Partnership Project).

The radio communication system 100 includes a mobile radio terminal device 102 such as a UE (user equipment), a nano equipment (NE), and the like. The mobile radio terminal device 102, also referred to as subscriber terminal, forms the terminal side while the other components of the radio communication system 100 described in the following are part of the mobile radio communication network side, i.e. part of a mobile radio communication network (e.g. a Public Land Mobile Network PLMN).

Furthermore, the radio communication system 100 includes a radio access network 103, which may include a plurality of radio access network nodes, i.e. base stations configured to provide radio access in accordance with a 5G (Fifth Generation) radio access technology (5G New Radio). It should be noted that the radio communication system 100 may also be configured in accordance with LTE (Long Term Evolution) or another mobile radio communication standard but 5G is herein used as an example. Each radio access network node may provide a radio communication with the mobile radio terminal device 102 over an air interface. It should be noted that the radio access network 103 may include any number of radio access network nodes.

The radio communication system 100 further includes a core network (5GC) 118 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 118 further includes an AUSF (Authentication Server Function) 114 and a PCF (Policy Control Function) 115.

The core network 118 may have multiple network slices 106, 107 and for each network slice 106, 107, the operator (also referred to MNO for Mobile Network Operator) may create multiple network slice instances (NSIs) 108, 109. For example, the core network 118 includes a first core network slice 106 with three core network slice instances (CNIs) 108 for providing Enhanced Mobile Broadband (eMBB) and a second core network slice 107 with three core network slice instances (CNIs) 109 for providing Vehicle-to-Everything (V2X) .

Typically, when a network slice is deployed, network functions (NFs) are instantiated, or (if already instantiated) referenced to form a network slice instance (NSI) and network functions that belong to a network slice instance are configured with a network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

An S-NSSAI (Single Network Slice Selection Assistance information) identifies a network slice and is included of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The core network 118 may further include a Network Data Analytics Function (NWDAF) 117. The NWDAF is responsible for providing network analysis information upon request from network functions. For example, a network function may request specific analysis information on the load level of a particular network slice. Alternatively, the network function can use the subscribe service to ensure that it is notified by the NWDAF if the load level of a network slice changes or reaches a specific threshold. The NWDAF 117 may have an interface to various network functions on the mobile radio communication network side, e.g. to the AMF 101, the SMFs 110, 112 and the PCF 115. For simplicity, only the interface between the NWDAF 117 and the AMF 101 is depicted.

The radio communication system 100 may further include an OAM (Operation, Administration and Maintenance) function (or entity) 116, e.g. implemented by one or more OAM servers which is connected to the RAN 103 and the core network 118 (connections are not shown for simplicity).

According to various embodiment, in a 5G radio communication system like the radio communication system 100, network slice related quota are defined. This means that for example the data rate provided by a network slice 106, 107, i.e. the total data rate of all PDU sessions for a single UE being served in a network is limited.

For example, the GST (Generic Network Slice Template) for a network slice 106, 107 may have an attribute "Maximum downlink throughput" which describes the maximum data rate supported by the network slice 106, 107 per UE 102 in downlink. These parameters could be used to offer different contract (i.e. subscription) qualities like gold, silver and bronze. An example is given in table 1.

**Table 1**

| Parameters | |
|---|---|
| Value | Integer |
| Measurement unit | kpbs |
| Example | Bronze: 50.000 kbps |
| | Silver: 400.000 kbps |
| | Gold: 1.000.000 kbps |
| Tags | Character attribute/Performance KPI (key performance identicator) |

Similarly, the GST (Generic Network Slice Template) for a network slice 106, 107 may have (possibly in addition to the "Maximum downlink throughput") an attribute "Maximum uplink throughput" which describes the maximum data rate supported by the network slice 106, 107 and/or per UE 102 in uplink and downlink. These parameters could be used in order to offer different contract qualities like gold, silver and bronze. An example may be similar to the one of table 1 for the downlink case.

It should be noted that GSMA (GSM Association) has defined a Generic Slice Template (GST) to provide a standardised list of attributes to characterise network slice type.

The quota (or limit) described above with reference to table 1 is a limit of the total data rate over the communication sessions provided in a network slice and/or for a mobile terminal, e.g. a data rate quota per network slice 106 or 107.

Alternatively or in addition, there may be a quota (or limit) which limits the total data rate over the communication sessions provided in a network slice (for all mobile terminals in the network slice together), i.e. a data rate quota per network slice 106, 107.

For example, for a certain network slice 106, 107, there may be a limit of 1 Gbps. Assuming that there are two mobile terminals 102 being served by the network slice (e.g. having PDU sessions in the network slice), the data rate for the mobile terminals 102 may be limited such that the aggregate (total) data rate is at most 1 Gbps. For example, the data rate for the first mobile terminal UE#1 (summed over all PDU sessions for UE#1 in the network slice) is limited to 600 Mbps and the data rate for the second mobile terminal UE#2 (summed over all PDU sessions for UE#2 in the network slice) is limited to 400 Mbps. Other network slice related quota which may be defined in a 5G radio communication system like the radio communication system 100 provide limitation of the maximum number of UEs and/or the maximum number of PDU sessions provided by a network slice 106, 107.

Quota may for example be defined only by the mobile network operator (MNO) or may also be defined by both a 3^{rd} party service provider (e.g. providing a service by means of the network slice) and the MNO. For example, the MNO and the 3^{rd} party service provider may have a corresponding service level agreement (SLA) prior to network slice instantiation.

The maximum number of UEs in a network slice may be defined by a "Number of terminals" attribute. The maximum number of PDU Sessions may be defined by a "Number of connections" attribute. For example, according to the information model for the network slice NRM (Network Resource Model) a "maxNumberofUEs" attribute may be provided in the OAM 116. Similarly, an attribute relating the maximum number of connections may be included in the OAM 116 according to an embodiment.

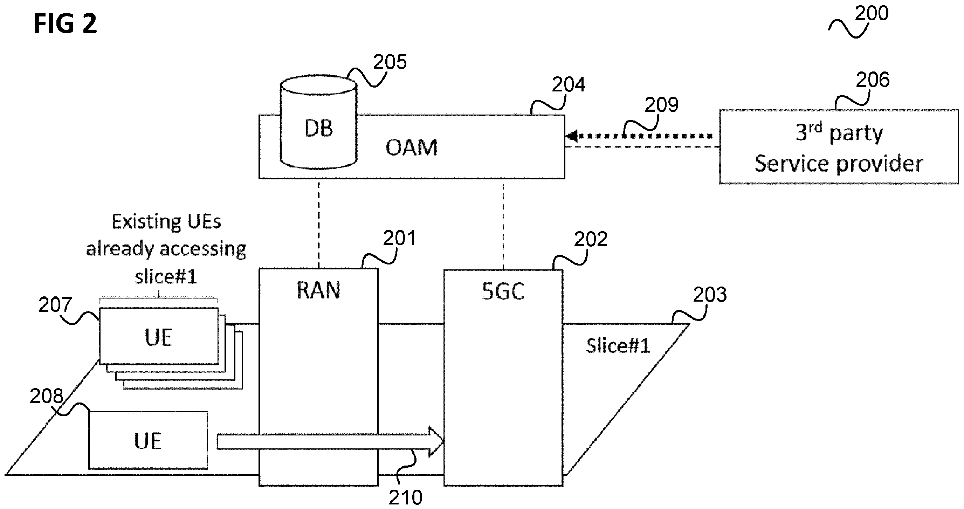

Figure 2 shows a radio communication system 200 having network slice quota related to the maximum number of mobile terminals registered in a network slice.

The radio communication system 200 includes a RAN 201, e.g. corresponding to RAN 103, a 5G core network (5GC) 202, e.g. corresponding to 5GC 118 which includes a (core) network slice 203, e.g. corresponding to one of the network slices 106, 107 and an OAM 204, e.g. corresponding to OAM 116. It should be noted that there may also be a plurality of RANs 201 providing radio access to the network slice 203.

The OAM 204 has a database 205 (e.g. a storage or memory) which stores one or more quota for the network slice 203, in this example including a quota limiting the maximum number of UEs supported by (or allowed for) the network slice 203.

Optionally, the quota may be based on a request 209 by a 3^{rd} party service provider 206 which requests the operator of the radio communication system 200 to limit a number of UEs for the network slice 203.

It is assumed that a plurality of UEs 207 are already accessing the network slice 203, i.e. are registered with the network slice 203. It is further assumed that an additional UE 208 sends a request 210 to access the core network slice 203 (i.e. to register with the core network slice 203).

If the quota has already been reached the 5GC 202 (e.g. an AMF) may respond to the request of 210 by means of a rejection of registration to the network slice 203.

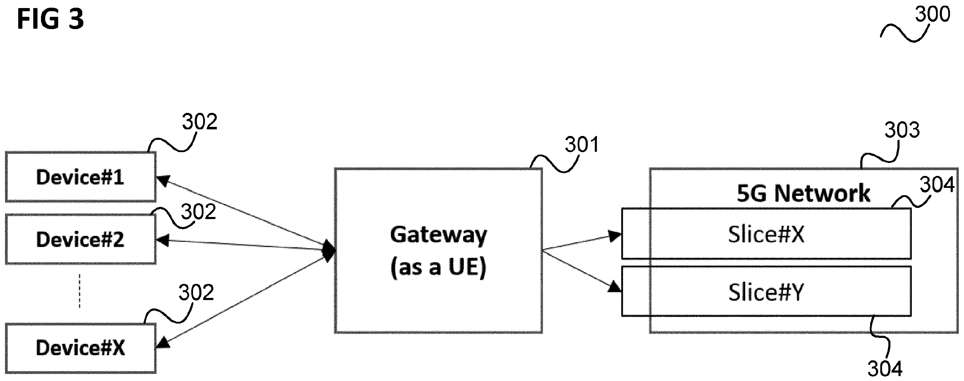

Similarly, a request by an additional UE 208 for a PDU Session may be rejected by the 5GC 202 (e.g. by an SMF) when there is a quota limiting the maximum number of PDU sessions supported by (or allowed for) the network slice 203 and the quota has already been reached (e.g. due to PDU sessions established in the network slice 203 for the plurality of UEs 207).
Another quota may limit the number of PDU sessions established for a mobile terminal (i.e. limit the number of PDU sessions per mobile terminal, rather than by per network slice 203). This for example is desirable in a scenario as illustrated in figure 3.

Differently, the quota may limit the date rate for a network slice (i.e. data rate limitation per network slice 203, rather than by per mobile terminal 207 or 208). This may for example also be desirable in a scenario as illustrated in figure 3.

Figure 3 shows a communication arrangement 300 including a gateway 301.

The gateway 301 acts as a gateway terminal between one or more communication devices (e.g. mobile terminals) 302 and a 5G network 303 having multiple network slices 304 (e.g. as described with reference to figure 1).

According to 5G, from the 5G network 303 point of view, the gateway 301 may be considered as normal UE (e.g. like a smartphone UE). The 5G network however knows that it is gateway acting as a UE.

In a case as illustrated in figure 3 the question arises how quota regarding the number of UEs per slice, number of PDU sessions or UL/DL data rate limitation should be applied. For example, the gateway 301 may enforce a limitation regarding number of registered UEs, established PDU sessions and throughput. For this, the gateway 301 may block a new UE connection or PDU session or enforce throughput limitation per UE in the gateway.

It may be desirable that the 5G network 303 can define a quota for the gateway 301 (i.e. for a mobile terminal since it regards the gateway 301 as mobile terminal) limiting the number of PDU sessions for the gateway 301 (e.g. 10 PDU sessions maximum) such that the gateway 301 starts blocking PDU sessions when their number reaches the limitation.

So, according to various embodiments, there may be one or more of the following quota defined (and enforced) in a communication system:
- a quota which limits the total data rate over the communication sessions provided in a network slice for a mobile terminal (i.e. per mobile terminal)
- a quota which limits the total data rate over the communication sessions provided in a network slice (over all mobile terminals which have a communication session in the network slice, i.e. per network slice)
- a quota which limits the number of mobile terminals registered in a network slice
- a quota which limits the number of communication sessions provided in a network slice
- a quota which limits the number of communication sessions (e.g. PDU sessions) provided for a mobile terminal (e.g. for the gateway scenario of figure 3), for example per network slice.

It should be noted that a limit (be it per mobile terminal and/or per network slice) of a data rate may refer to an uplink data rate, a downlink data rate, each of uplink and downlink data rate (i.e. the limit may be a limit pair including a limit for the downlink data rate and a limit for the uplink data rate) or the sum of uplink data rate and downlink data rate.

It may be desirable to dynamically adjust quota as the ones described above. For example, while, as it is described above, it is possible for a network to support per slice data rate limitation e.g. by configuration, the network may need, in order to adhere to the GST parameters, to make adjustments to control aggregate traffic in UL and DL across the slice e.g. trigger fairness across UE data rates in the PLMN when this limit of data rate is reached.

So, it may be desirable to support adjustment of data rate limits per UE, total number of UEs operating (being registered and/or having PDU sessions) in the slice or any other (quota-related) network parameters (e.g. number PDU sessions per UE).

An example for an adjustment is that a network slice is initiated with 1Gbps UL/DL limitation and there are 5 UEs active in the network slice (assume 200Mbps per UE). Then, after some time, there is an action (adjustment) to apply 600Mbps UL/DL limitation for a slice. In this case, the network may either release a UE or a PDU Session or even reduce UL/DL limitation for each UE.

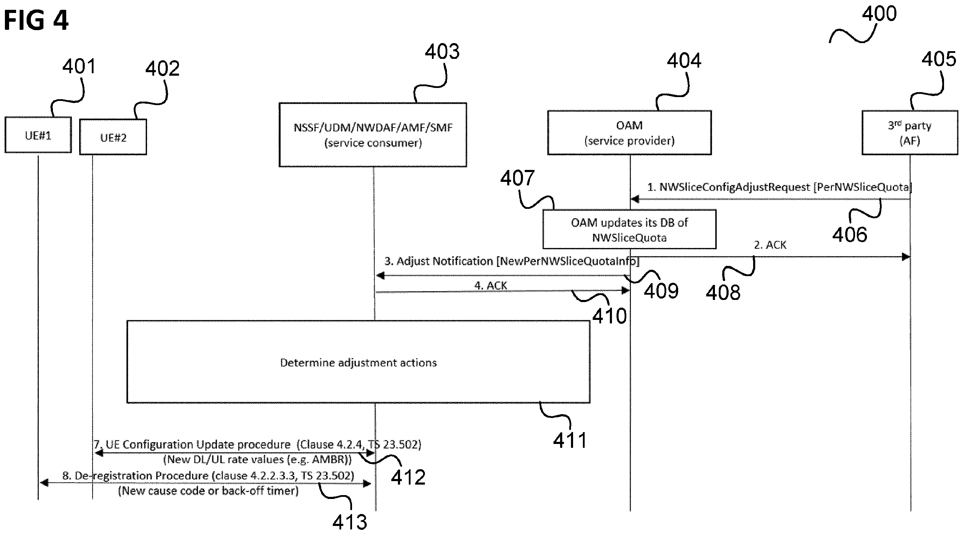

Figure 4 shows a flow diagram 400 illustrating the enforcement of a quota limiting DL and/or UL throughput per network slice.

A first UE 401, a second UE 402, a network component 403 (e.g. a network function such as an NSSF 105, a UDM 104, an NWDAF 117, an AMF 101 or an SMF 110, 112) acting as service consumer, an OAM 404 (e.g. corresponding to OAM 116) acting as service provider and a third party 405 are involved in the flow.

In 406, the third party 405 sends a request to adjust the quota to the OAM 404.

In 407, the OAM updates its database of network slice quota and acknowledges the request in 408.

In 409, the OAM sends an adjustment notification to the network component 403 which acknowledges the adjustment in 410.

In 411, depending on the adjustment notification, different consequences can take place in the network component 403. For example, in case of an adjustment reducing a data rate limit, the network component decides to reduce DL/UL data rate per network slice based on a priority list, e.g. depending on subscription type (e.g. Bronze, Silver and Gold) or DNN (data network name) or PDU Session Type or QoS Flow type etc.

For example, it is assumed that an AMF 403 was notified to reduce the maximum DL/UL data rate per slice. The AMF 403 may get notified about the adjusted DL/UL limitation per slice via UDM or via NSSF or via NWDAF or via O&M

(Operations and Maintenance) or via AF (application function).

Then, the AMF 403 determines for which UE data rate will be limited or which UE or PDU session will be released based on priority e.g. UE subscriptions type and/or DNN and/or QoS Flow type and/or PDU Session Type. Based on priority order, AMF determines which UE(s) need(s) to reduce the data rate or determines one or more UEs to be released (de-registered) or one or more PDU Sessions to be released.

In case the AMF needs to release a UE in order to guarantee the new (i.e. adjusted) limitation per slice, the AMF triggers a de-registration procedure with a cause code and/or back-off timer.

In case the AMF needs to release a PDU Session in order to guarantee the new limitation per slice, the AMF sends release notification to the respective SMF(s), so that the SMF(s) can release the PDU Sessions with cause code and/or back-off timer.

For example, the AMF decides to update UE#2 and release UE#1.

Accordingly, in 412, the AMF 403 initiates a UE Configuration Update procedure to notify the new limitation to the UE (e.g. UE#2) and initiates a de-registration procedure for UE#1 in 413.

Further, e.g. in case of reduction of the data rate, the AMF (or SMF) notifies the UE(s) (UE#2 in this example) and RAN about the new DL/UL data rate.

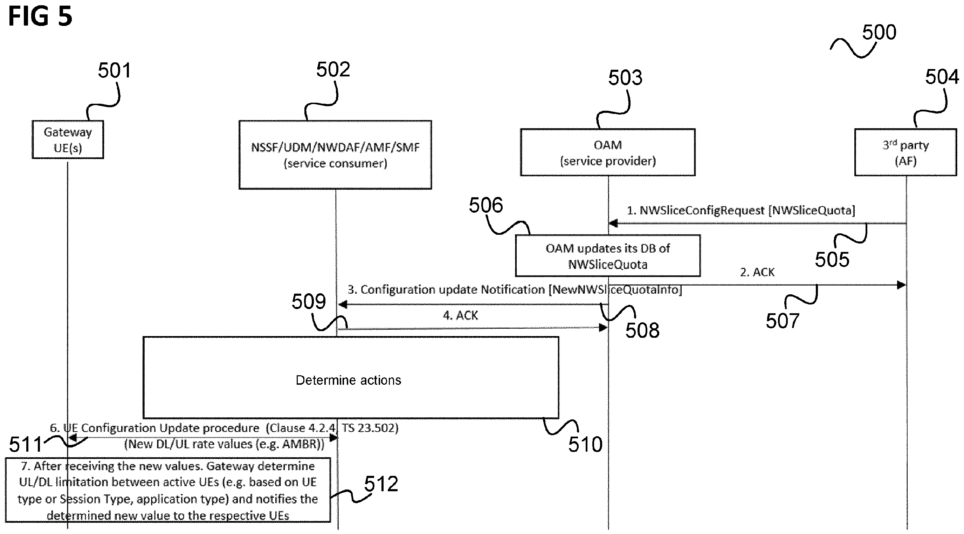

Figure 5 shows a flow diagram 500 illustrating the enforcement of a quota limiting DL and/or UL throughput per network slice in a gateway scenario as illustrated in figure 3.

A UE 501 (acting as gateway), a network component 502 (e.g. a network function such as an NSSF 105, a UDM 104, an NWDAF 117, an AMF 101 or an SMF 110, 112) acting as service consumer, an OAM 503 (e.g. corresponding to OAM 116) acting as service provider and a third party 504 are involved in the flow.

In 505, the third party 504 sends a configuration request to the OAM 503.

In 506, the OAM updates its database of network slice quota and acknowledges the request in 507.

In 508, the OAM sends a configuration update notification to the network component 502 which acknowledges in 509.

In 510, the network component 502 determines the actions to be taken (which may be actions according to an adjustment of a quota but also actions according to newly introduced quota).

For example, the network component 502 is an AMF which got notified (e.g. via OAM or UDM) to reduce the DL/UL per slice per UE. Then, the AMF 502 determine that the gateway UE 501 needs to be updated with the new limitation. In this case, the AMF 502, in 511, initiates a UE Configuration Update procedure to notify the new limitation to the gateway UE 501. In addition, AMF also notifies to the new values to the RAN.

In 512, after receiving the new values, the gateway 501 distributes UL/DL limitations between active UEs (e.g. based on UE type or Session Type, application type, e.g. similar to 411 logic) and notifies the determined new value to the respective UEs.

For example, the AMF 502 notifies to the Gateway UE 501 that UL/DL is 1Gbps. Then, the gateway UE 501 divides the 1Gbps between connected UEs (e.g. corresponding to the devices 302 in figure 3).

It should be noted that similarly, a limitation related to the maximum number of registered UEs or maximum number of PDU sessions in a gateway scenario may be enforced during the Registration Procedure or PDU Session Procedure.

For example, during Registration Procedure, the AMF 502 provides "UE limitation per Slice or PDU Session per Slice" to the gateway UE 501 in the Registration Accept message. So, the gateway UE 501 applies the limitation on behalf of the network. For this, a new information element may be introduced into the Registration Accept/Reject Message.

The AMF 502 may also get the limitation details from the UDM (e.g. the gateway subscription includes the limitation) or determine locally based on subscription information. For this, a new information element may be introduced into the subscription information (or a UE in the UDM).

A similar approach is applicable for the case of a quota limiting the number of PDU Sessions. For example, an SMF 502 notifies the limitation to the gateway UE 501. For this, a new information element may be introduced into the PDU Session Establishment Accept/Reject Message.

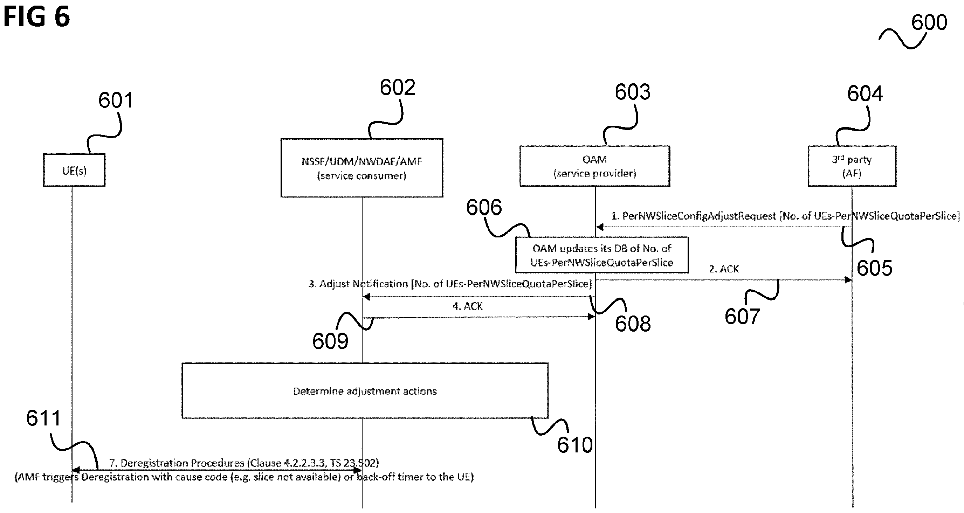

Figure 6 shows a flow diagram 600 illustrating the enforcement of a quota limiting the number of registered UEs per network slice.

One or more UEs 601, a network component 602 (e.g. a network function such as an NSSF 105, a UDM 104, an NWDAF 117 or an AMF 101) acting as service consumer, an OAM 603 (e.g. corresponding to OAM 116) acting as service provider and a third party 604 are involved in the flow.

In 605, the third party 604 sends a request to adjust the quota to the OAM 404.

In 606, the OAM 603 updates its database of network slice quota and acknowledges the request in 607.

In 608, the OAM 603 sends an adjustment notification to the network component 602 which acknowledges the adjustment in 609.

In 610, depending on the adjustment notification, different consequences can take place in the network component 602. For example, in case of an adjustment reducing a limit of the number of registered UEs, the network component 602 decides to release UEs based on priority, e.g. depending on subscription type (e.g. Bronze, Silver and Gold).

For example, it is assumed that an AMF 602 got notified to reduce the Number of UEs in a network slice.

The AMF 602 may then for example decide to initiate a de-registration Procedure for each low priority UE, e.g. each UE having a Bronze subscription.

Accordingly, for example, the AMF 602 initiates a de-registration procedure for the UE 601 in 611. The UE 601 may be provided with a de-registration cause code so that the UE 601 can try to register after some time and/or a back-off timer.

An AMF may also get notified to de-register one or more UEs, e.g. via UDM or via NSSF or via NWDAF or via O&M. In case of NSSF, the NSSF determines the AMFs which should decrease (or analogously increase) the number of UEs and notifies them respectively.

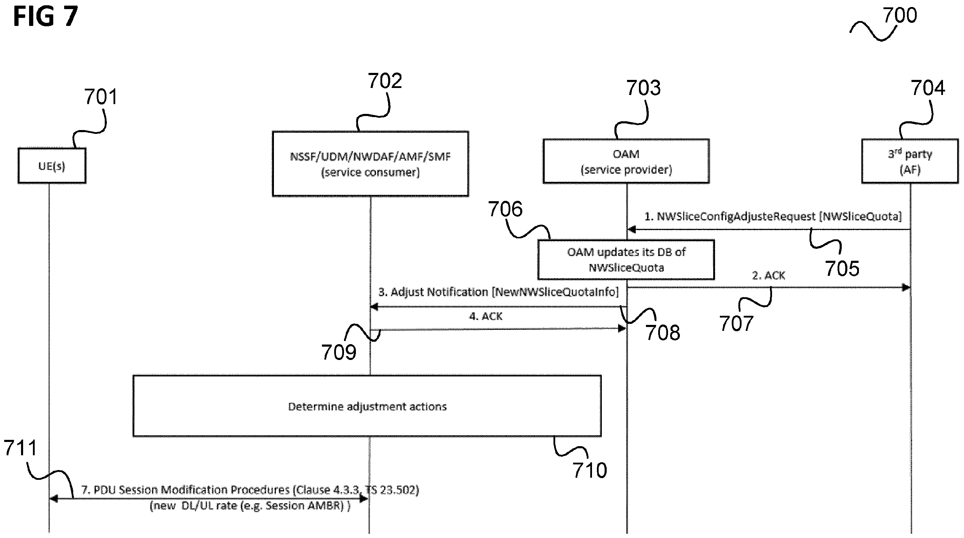

Figure 7 shows a flow diagram 700 illustrating the enforcement of a quota limiting DL and/or UL throughput per UE.

One or more UEs 701, a network component 702 (e.g. a network function such as an NSSF 105, a UDM 104, an NWDAF 117, an AMF 101 or an SMF 110, 112) acting as service consumer, an OAM 703 (e.g. corresponding to OAM 116) acting as service provider and a third party 704 are involved in the flow.

In 705, the third party 704 sends a request to adjust the quota to the OAM 703.

In 706, the OAM updates its database of network slice quota and acknowledges the request in 707.

In 708, the OAM sends an adjustment notification to the network component 702 which acknowledges the adjustment in 709.

In 710, depending on the adjustment notification, different consequences can take place in the network component 702. For example, in case of an adjustment reducing a data rate limit, the network component decides to reduce DL/UL data rate per network slice based on a priority list, e.g. depending on DNN (data network name) or PDU Session Type or QoS Flow type etc.

For example, it is assumed that an AMF or SMF 702 was notified to reduce the maximum DL/UL data rate per UE. The AMF or SMF 702 may get notified about the adjusted DL/UL limitation per UE via UDM or via NSSF or via NWDAF or via O&M or via AF (application function).

Then, the AMF or SMF 702 determines which session or flow should be limited (in its data rate) or released based on priority of the UE (e.g. based on a priority order of the sessions or flows) e.g. DNN and/or QoS Flow type and/or PDU Session Type, etc.

In case of a reduction, in 711, the AMF or SMF 702 initiates a UE Configuration Update procedure to notify the new limitation (DL/UL data rate limitation) to the UE 701. In addition, the AMF or SMF 702 also notifies the new values to the RAN.

In case an SMF 702 decides to release a PDU Session or Flow in order to guarantee the new limitation per UE and/or per network slice, the SMF 702 triggers a PDU Session Release procedure with a cause code and/or back-off timer.

In case an SMF 702 decides to update the new DL/UL values for a PDU Session or Flow, the SMF 702 triggers a PDU Session modification procedure and notifies the new DL/UL rate (e.g. Session AMBR (Aggregate Maximum Bit Rate)) to the UE and RAN node.

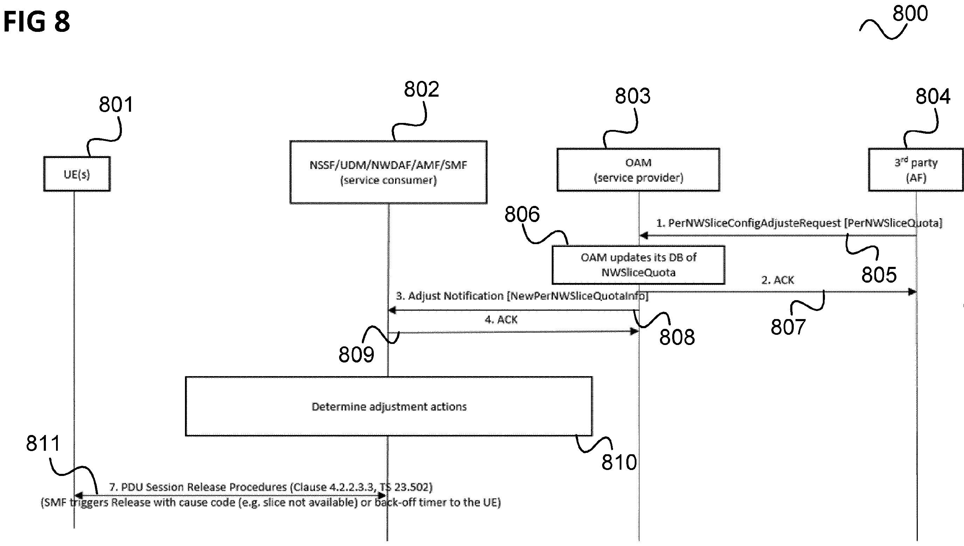

Figure 8 shows a flow diagram 800 illustrating the enforcement of a quota limiting the number of PDU sessions per network slice.

One or more UEs 801, a network component 802 (e.g. a network function such as an NSSF 105, a UDM 104, an NWDAF 117, an AMF 101 or an SMF 110, 112) acting as service consumer, an OAM 803 (e.g. corresponding to OAM 116) acting as service provider and a third party 804 are involved in the flow.

In 805, the third party 804 sends a request to adjust the quota to the OAM 404.

In 806, the OAM 803 updates its database of network slice quota and acknowledges the request in 807.

In 808, the OAM 803 sends an adjustment notification to the network component 802 which acknowledges the adjustment in 809.

In 810, depending on the adjustment notification, different consequences can take place in the network component 802. For example, in case of an adjustment reducing a limit of the number of PDU sessions, the network component 802 decides to release PDU sessions based on priority, e.g. depending on subscription type (e.g. Bronze, Silver and Gold).

For example, it is assumed that an SMF 802 got notified to reduce the Number of PDU sessions in a network slice.

The SMF 802 may then for example decide to initiate a PDU session release procedure based on priority, e.g. subscription type and/or DNN and/or QoS Flow type and/or PDU Session Type.

Accordingly, for example the SMF 802 initiates a PDU session release procedure for the UE 801 in 811. The UE 801 may be provided with a cause code so that the UE 801 can try to establish a PDU session after some time and/or a back-off timer.

An SMF may also get notified to release PDU sessions, e.g. via UDM or via NSSF or via NWDAF or via O&M. In case of AMF, the AMF determines the SMFs which should decrease (or analogously increase) the no. of PDU sessions and notifies them respectively.

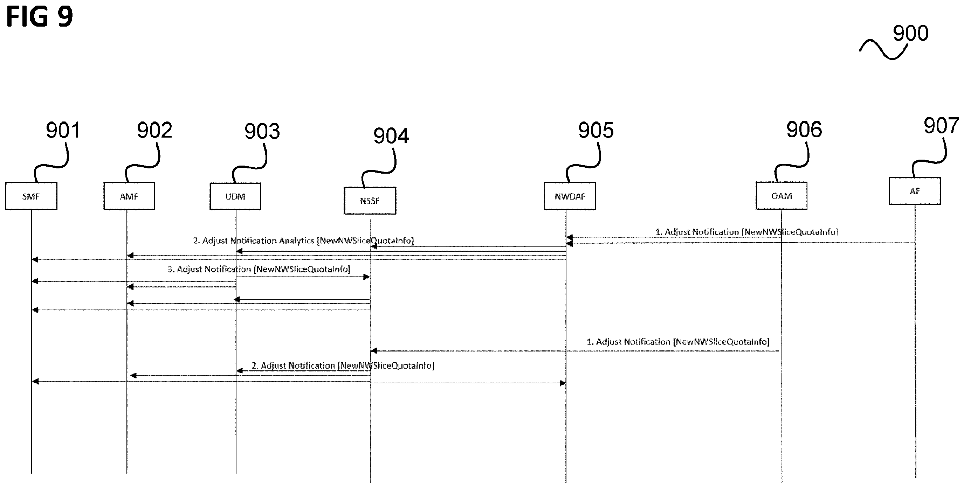

Figure 9 shows a flow diagram 900 illustrating various adjustment communication options.

An adjustment notification may be transmitted to an NWDAF 905 from an OAM 906 or an AF 907.

The NWDAF 905 may then forward the adjustment by and adjustment notification analytics message to an NSSF 904, and UDM 903, an AMF 902 or an SMF 901.

The UDM 903 may send or forward an adjustment notification to the NSSF 904, to the AMF 902 or the SMF 901.

The NSSF 904 may forward the adjustment notification to the UDM 903, to the AMF 902 or the SMF 901.

The OAM 906 may also send an adjustment notification to the NSSF 904 which may forward the adjustment notification to the UDM 903, to the AMF 902, the SMF 901 or the NWDAF 905 or an OAM 906 may also send an adjustment notification to the NSSF 904, to the UDM 903, to the AMF 902, the SMF 901 or the NWDAF 905.

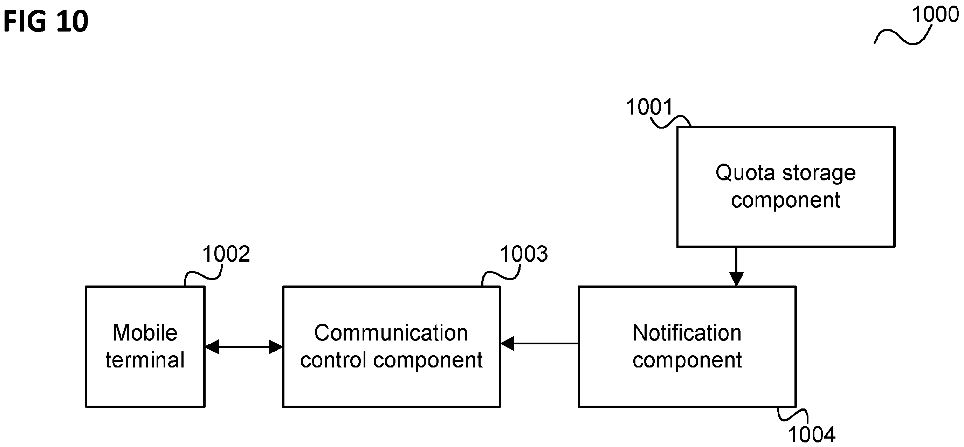

In summary, according to various embodiments, a communication system is provided as illustrated in figure 10.

Figure 10 shows a communication system 1000 according to an embodiment.

The communication system 1000 includes a quota storage component 1001 configured to store a specification of a quota limiting a data rate, a number of communication sessions or a number of registered mobile terminals.

Further, the communication system 1000 includes a communication control component 1003 and a notification component 1004 configured to notify the communication control component about the quota.

The communication control component 1003 is configured to control communication with at least one mobile terminal 1002 such that the quota is fulfilled.

According to various embodiments, in other words, an information about a limit (which may also be an adjustment of a limit) of a maximum data rate (also referred to as throughput), a maximum number registered mobile terminals or a number of communication sessions (e.g. PDU sessions), for example per network slice and/or per mobile terminal is communicated by the notification component 1004 to a component which manages communication according to the limit (e.g. enforces the limit), i.e. ensures that the limit is not exceeded. Thus, an operator may enforce a (e.g. data rate) limitation per network slice and/or per UE.

Such a limit (e.g. a data rate limit) may be per network slice and per mobile terminal and may be specific for the mobile terminal, e.g. may be subscription-dependent.

This maximum data rate may refer to the uplink data rate, the downlink data rate, each of uplink and downlink data rate (i.e. the limit may be a limit pair including a limit for the downlink data rate and a limit for the uplink data rate) or the sum of uplink data rate and downlink data rate.

For example, the communication control component 1003 is configured to monitor and control the data rate of one or more communication connections of the mobile terminal 1002 in the communication system such that the total data rate over the communication sessions provided in a network slice for the mobile terminal does not exceed the limit. Even when the total data rate over the communication sessions provided in the network slice for the mobile terminal has not yet exceeded the limit, the communication control component 1003 may also reject a new PDU Establishment Request sent by the UE for establish a new communication session within the network slice in addition to the existing communication session(s) already established priori, e.g., if the communication management component would know that the total data over the communication sessions including both the existing ones and the new one would result in exceeding the limit. Similarly, if the quota specifies a data rate per network slice (rather than per mobile terminal), the communication control component may manage the total data rate of communication sessions in the network slice.

It should be noted that a network slice may cover the CN part, the RAN part or both the CN part and the RAN part of a mobile radio communication network. In particular this means that the network slice may be a core network slice or may be a RAN network slice or may be a network slice including both core network components and RAN network components.

The component which enforces the limit may be a component of the RAN. For example, the component may be a component of the MAC (Medium Access Control) layer which performs packet scheduling for connections between the communication network and the mobile such that the resulting data rate does not exceed the limit. Alternatively, the component which enforces the limit may be a network function within the mobile core network such as the AMF or the SMF or the PCF, or the NWDAF or even a network component in the OAM, which may have an information of what is the current total data rate over the communication sessions provided in the network slice for the mobile terminal, which is not yet exceeded the limit. Later on, if a UE sends a request for establishing a new PDU Session which may require a certain data rate to be served, and would then result to exceeding the limit, in this case, the network function in the mobile core network rejects the new PDU Establishment Request sent by the UE. Otherwise, if still under the rate limit, the network function in the mobile core network accepts the new PDU Establishment Request.

There may be a component which monitors the current total data rate over communication sessions provided in a network slice for a mobile terminal. This may be a component of the RAN or a network function within the mobile core network such as the UPF. The current data rate of the communication sessions, which may then be used to calculate the total data rate over all communication sessions provided in the network slice for the mobile terminal, may be an average data rate from a certain period of time, or an instant data rate. These one or more monitoring components may then further provide such data rate information of a communication session to another network function within the mobile core network such as the SMF, PCF or NWDAF, which ask for getting such data rate information either on a subscription basis (e.g., via a Subscribe/Notify method) or on an on-demand basis (e.g., Request/Response). The OAM may also collect such data rate information from these one or more monitoring components.

The communication system may include one or more communication networks and the one or more communication connections may be communication connections between the mobile terminal and one (or more) of the communication networks.

According to various embodiments, mechanisms are introduced to notify and/or update network slice related quota information, e.g. to a communication network function, e.g. in 5GC/RAN. This may also be performed across PLMNs (e.g. between a H-PLMN and a V-PLMN) and between a PLMN and an NPN. A request of a mobile terminal, e.g. a UE, for registration or session establishment may then be rejected based on the network slice quota or adjustment notification (in particular in case the quota limits the number of registered UEs and/or number of PDU sessions and/or data rate limitation). This may for example be a UE which is roaming, i.e. requesting registration or a PDU session in a V-PLMN. This allows an operator to enforce network slice related quota, which may for example be based on a service level agreement, even across PLMNs. In the roaming case, a network slice quota or an adjustment may be specified by the H-PLMN (e.g. the H-PLMN operator) or may be specified by the V-PLMN (e.g. the V-PLMN operator) or may be agreed upon by the H-PLMN and the V-PLMN (e.g. by the H-PLMN operator and the V-PLMN operator). For example, a 3^{rd} party may be allowed to request the definition or update of network slice related quota, e.g. from an OAM of the operator of the communication network.

Besides a roaming scenario, the approach of figure 10 may also be applied in a scenario with a PNI-NPN (Public Network Integrated - Non-Public Network), where some 5GC network functions may be managed by a PNI-NPN, and some 5GC network functions are provided by a PLMN.

In other words, according to various embodiments, a mechanism is provided for 5G communication system to enforce (e.g. network slice related) quota handling, e.g., to ensure that the maximum number of UEs and/or the maximum number of (e.g. PDU) sessions in a network slice is kept within a network slice quota. Similarly, rate/throughput limitation (per network slice and/or per UE) may be performed in a 5GS, in particular in a roaming scenario. For example, an operator may enforce a rate/throughput limitation (which may include a maximum downlink and/or a uplink data rate) per network slice and/or per UE, e.g. in a 5G communication system (5GS). This may in particular be done for mobile terminals which are connected via a gateway (e.g. a mobile terminal acting as gateway). For example, a 5G network function may provide a specification of a quota (e.g. a network slice limitation) to a (e.g. residential) gateway UE so that it enforces the limitation on behalf of the 5G network.

According to various embodiments, a quota may be adjusted (or changed), e.g. a data rate limit may be adjusted per network slice or changed for a UE or a limit of a number of registered UEs or a limit of a number of communication sessions may be changed and the notification component may notify the communication control component about the adjustment (i.e. about the adjusted quota). The communication control component may then perform a decision process and a control to ensure that the adjusted quota is fulfilled, e.g. release (i.e. de-register) one or more mobile terminals, release one or more communication sessions and/or reduce the data rate of one or more communication sessions. The communication control component may select one or more mobile terminals and/or communication sessions which are targeted by such measures based on priorities of the one or more mobile terminals and/or PDU sessions. For example, mobile terminals with a low-priority subscriptions (e.g. a "Bronze" subscription) are de-registered or their sessions are released (or the data rate of the sessions reduced) rather than mobile terminals with higher-priority subscriptions (e.g. "Silver" or "Gold"). The decision and/or selection process by the communication control component may also be based on an operator policy.

However, it should be noted that embodiments are not limited to the adjustment of a quota but may also be applied when a quota is newly defined and introduced.

The notification component may determine (identify) the communication control component when a quota is defined or adjusted which has an impact on the communication control component (e.g. on a network slice with which the communication control component is associated). An adjustment may for example be triggered by an AF, e.g. of a third party.

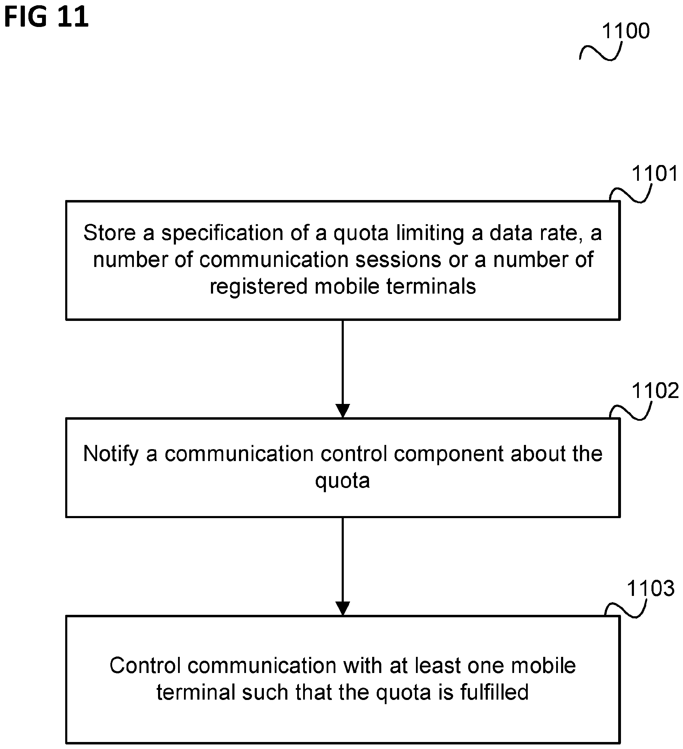

The communication system 1000 for example carries out a method as illustrated in figure 11.

Figure 11 shows a flow diagram 1100 illustrating a method for operating a communication system.

In 1101, a specification of a quota limiting a data rate, a number of communication sessions or a number of registered mobile terminals is stored.

In 1102, a communication control component is notified about the quota.

In 1103, communication with at least one mobile terminal is controlled such that the quota is fulfilled.

The components of the communication system (e.g. the quota storage component, the notification component and the communication control component) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication system comprising:
a quota storage component configured to store a specification of a quota limiting a data rate, a number of communication sessions or a number of registered mobile terminals;
a communication control component;
a notification component configured to notify the communication control component about the quota;
wherein the communication control component is configured to control communication with at least one mobile terminal such that the quota is fulfilled.

2. The communication system of claim 1, wherein the data rate is the total data rate over the communication sessions provided in a network slice for a mobile terminal or wherein the data rate is the total data rate over all communication sessions provided in a network slice or wherein the quota limits the number of mobile terminals registered in a network slice and/or the number of communication sessions provided in a network slice or wherein the quota limits the number of communication sessions provided for a mobile terminal.

3. The communication system of claim 1 or 2, wherein the quota is specific for a mobile terminal or wherein communication system comprises a plurality of network slices and/or the quota is specific for a network slice.

4. The communication system of any one of claims 1 to 3, wherein the quota specifies a limit of a data rate and the communication control component is a data rate management component configured to monitor and control the data rate of one or more communication connections in the communication system such that the total data rate does not exceed the limit.

5. The communication system of any one of claims 1 to 4, wherein the quota specifies a limit of a number of communication sessions or a number of registered mobile terminals and the communication control component is configured to reject a request of a mobile terminal for registration or establishment of a session if the quota has been reached.

6. The communication system of claim 5, wherein the communication control component is configured to reject the request by means of a rejection including a cause code and/or a back-off timer.

7. The communication system of any one of claims 1 to 6, wherein the notification component is configured to notify the communication control component about the quota in response to an adjustment of the quota.

8. The communication system of claim 7, wherein the communication control component is configured to, upon notification of an adjustment of the quota, de-register one or more mobile terminals, release one or more communication sessions or reduce the data rate of one or more communication connections, respectively, such that the adjusted quota is fulfilled.

9. The communication system of claim 8, wherein the communication control component is configured to de-register one or more mobile terminals, release one or more communication sessions or reduce the data rate of one or more communication connections, respectively, based on a respective priority of the one or more mobile terminals and/or a respective priority of the communication sessions.

10. The communication system of any one of claims 6 to 9, wherein the communication control component is configured to, upon notification of an adjustment of the quota, notify the at least one mobile terminal about the adjusted quota.

11. The communication system of any one of claims 1 to 10, wherein the communication control component is a radio access network component of a communication network of the communication system.

12. The communication system of any one of claims 1 to 11, wherein the at least one mobile terminal or the communication control component is a gateway connected between a mobile radio communication network and one or more further mobile terminals.

13. The communication system of any one of claim 12, wherein the gateway is configured to act as a mobile terminal with respect to the communication network or notification component with respect to the mobile terminal(s) connected to the gateway.

14. The communication system of any one of claims to 1 to 13, wherein the notification component is configured to notify the communication control component about the quota by means of a registration accept message or a registration reject message, a communication session establishment accept message or a communication session establishment reject message.

15. A method for operating a communication system comprising:
storing a specification of a quota limiting a data rate, a number of communication sessions or a number of registered mobile terminals;
notifying a communication control component about the quota; and
controlling communication with at least one mobile terminal such that the quota is fulfilled.
